# EUROPÄISCHE PATENTSCHRIFT

(11) **EP 0 951 116 B1**
(45) Veröffentlichungstag und Bekanntmachung des Hinweises auf die Patenterteilung: **12.09.2007**
(21) Anmeldenummer: 99104666.5
(22) Anmeldetag: 09.03.1999
(51) Int. Cl.: H02B 1/30

(54) **Rahmenschenkel für ein Rahmengestell eines Schaltschrankes**
Frame member for an electrical cabinet frame
Montant pour le chassis d'une armoire de distribution

(30) Priorität: 17.04.1998 DE 19817919
(43) Veröffentlichungstag der Anmeldung: 20.10.1999
(73) Patentinhaber: Rittal-Werk Rudolf Loh GmbH & Co. KG, 35745 Herborn (DE)
(72) Erfinder: Nicolai, Walter, 35418 Buseck 1 (DE); Münch, Udo, 35764 Sinn (DE); Vogel, Georg, 71701 Schwieberdingen (DE)
(74) Vertreter: Fleck, Hermann-Joseph

(56) Entgegenhaltungen:
- DE-A- 4 336 285
- DE-A- 19 544 432
- US-A- 4 643 319

## Beschreibung

Die Erfindung betrifft einen Rahmenschenkel für ein Rahmengestell eines Schaltschrankes, wobei der Rahmenschenkel mit einer Profilinnenseite und einer Profilaußenseite ein geschlossenes Hohlprofil mit zwei längsgerichteten Hohlräumen bildet, wobei die Profilaußenseite zur Außeneckkante des Rahmengestelles hin einen Freiraum abgrenzt, wobei die Profilinnenseite mehrere im Winkel zueinander stehende Profilabschnitte mit mindestens je einer Reihe von Befestigurigsaufnahmen aufweist, wobei die Profilinnenseite und die Profilaußenseite im Bereich der rechtwinklig aufeinander stoßenden Außenseiten des Rahmengestelles Außenkanten bilden, an die sich in Richtung zur Außeneckkante hin Anlagestege ohne oder mit Aufnahmenuten für Dichtungselemente anschließen, die jeweils an einem der beiden Hohlräume angrenzen, wobei die Anlagestege in äußere Profilseiten übergehen, die senkrecht zu den zugekehrten Außenseiten des Rahmenprofils stehen.

An ein Rahmengestell eines Schaltschrankes sind die unterschiedlichsten Anforderungen gestellt, die alle durch die Querschnittsform der verwendeten Rahmenschenkel erfüllt werden müssen. Dabei können im Bereich des Boden- oder Deckrahmens durchaus in der Querschnittsform der vertikalen Rahmenschenkel abweichende Rahmenschenkel verwendet werden. Gerade bei den vertikal ausgerichteten Rahmenschenkeln des Rahmengestelles sind möglichst viele in mehrere Richtungen ausgerichtete Befestigungsmöglichkeiten gefordert. Außerdem muss mit möglichst geringem Materialaufwand für den Rahmenschenkel eine optimale Festigkeit, vorzugsweise Verwindungssteifigkeit erreicht und dennoch eine einfache Herstellung des Rahmenschenkels ermöglicht werden. Darüber hinaus muss im Bereich der vertikalen Außeneckkanten des Rahmengestelles genügend Freiraum zur Anbringung der Schamierleiste einer Schranktür und zur Ausbildung und Unterbringung von Dichtungselementen für anzubringende Seitenwände oder der Schrankrückwand vorhanden sein.

Es sind eine Vielzahl von Rahmenschenkeln für ein Rahmengestell eines Schaltschrankes bekannt, die zum Teil die vorstehend genannten Anforderungen erfüllen, jedoch nicht in allen Belangen eine befriedigende Lösung bieten. Dabei schneiden als offene Hohlprofilabschnitte ausgebildete Rahmenschenkel wesentlich schlechter ab als geschlossene Hohlprofilabschnitte.

Geschlossene Hohlprofile sind beispielsweise aus der DE 195 44 432 A1 bekannt. Diese Hohlprofile werden in mehreren Abkantschritten aus Blechzuschnitten profiliert.

Es ist Aufgabe der Erfindung, einen Rahmenschenkel für ein Rahmengestell eines Schaltschrankes zu schaffen, der insbesondere in der Verwendung als vertikaler Rahmenschenkel die für universelle Befestigungsmöglichkeiten ausreichend hohe Festigkeit bei geringem Materialaufwand und einfacher Herstellbarkeit die gestellten Anforderungen optimal erfüllt.

Diese Aufgabe wird dadurch gelöst, dass die äußeren Profilseiten unmittelbar über einen Verbindungsabschnitt miteinander verbunden sind, der senkrecht zur Rahmengestelldiagonalen ausgerichtet ist und mit einem gleich ausgerichtet inneren Verbindungsabschnitt der Profilinnenseite verbunden ist, und/oder dass der senkrecht zur Rahmengestelldiagonalen stehende, mit dem gleich ausgerichteten äußeren Verbindungsabschnitt verbundene innere Verbindungsabschnitt der Profilinnenseite inneren Profilseiten unmittelbar verbindet, wobei diese inneren Profilseiten parallel zu den zugekehrten Außenseiten des Rahmenschenkels verlaufen.

Die Profilaußen- und/oder -innenseite ist bei dieser Profilgeometrie sehr einfach gestaltet und mit großen Biegewinkeln und wenigen Kantungen, insbesondere in einer Profiliermaschine, einfach fertigbar. Dabei zeichnet sich das Zwei-Kammer-Hohlprofil durch gute Festigungseigenschaften aus. Die parallel zur Außenseite verlaufenden Anlagestege nehmen üblicher Weise Dichtungsdrücke von angeschlossenen Seitenwänden auf, die über die senkrecht zu der Außenseite stehenden Profilseiten sicher in den Verbindungssteg abgetragen werden können.

Der Verbindungssteg bildet mit den beiden anschließenden Profilseiten eine nach außen offene, hinterschnittene Aufnahme, in die Anbauelemente leicht von außen eingesetzt werden können.

Der von den Profilseiten der Profilaußenseite begrenzte Freiraum zur Außeneckkante hin bietet ausreichend Gelegenheit zur Anlenkung einer Schranktür sowie zur Einführung von abgekanteten Verkleidungselementen und deren Abdichtung am Rahmenschenkel, wobei die Dichtungsstege, Anlagestege und/oder Aufnahmenuten in den Anlagestegen der Profilaußenseite viele Variationsmöglichkeiten bieten.

Nach einer Ausgestaltung ist vorgesehen, dass der Freiraum zumindest in dem von den Außenseiten des Rahmengestelles ausgehenden Teilbereichen durch senkrecht zu den zugekehrten Außenseiten stehende Profilseiten der Profilaußenseite begrenzt ist.

Damit wird schon mit kleinem Abstand der Außenkanten des Rahmenschenkels von der Außeneckkante des Rahmengestelles eine ausreichend große Einführöffnung in den Freiraum geschaffen.

Ist nach einer Ausgestaltung vorgesehen, dass die den Freiraum begrenzenden Profilseiten der Profilaußenseite über einen Verbindungsabschnitt miteinander und/oder mit der Profilinnenseite verbunden sind, dann kann der Freiraum im Bereich der Rahmengestelldiagonale in seiner Tiefe begrenzt werden und der Verbindungsabschnitt der Profilaußenseite erhöht die Verwindungssteifigkeit des Rahmengeschenkels. Die Befestigungsmöglichkeiten am Rahmenschenkel lassen sich auch im Bereich der Profilaußenseite dadurch erweitern, dass der Verbindungsabschnitt mit zusätzlichen Befestigungsaufnahmen versehen ist.

In vielen Fällen kann es für ausreichend erachtet werden, wenn vorgesehen ist, dass die Profilinnenseite eine von Außenkante zu Außenkante geführte Profilseite ist, die spiegelbildlich zur Rahmengestelldiagonale mit Befestigungsaufnahmen versehen ist. Gemäß einer möglichen Erfindungsausgestaltung kann es vorgesehen sein, dass die Profilinnenseite und die Profilaußenseite zwei identische Hohlräume einschließen.

Die Ausrichtung der Profilseiten von Profilinnenseite und Profilaußenseite kann jedoch auch so vorgenommen werden, dass die Profilinnenseite und die Profilaußenseite zwei im Querschnitt im Wesentlichen quadratische oder rechteckförmige Hohlräume einschließen.

Der Verbindungsabschnitt der Profilinnenseite kann als zusätzliche Befestigungsebene genutzt werden wenn vorgesehen ist, dass der Verbindungsabschnitt der Profilinnenseite mit zusätzlichen Befestigungsaufnahmen versehen ist.

Weist die Profilaußenseite des Rahmenschenkels einen Verbindungsabschnitt auf, dann kann auch dieser Befestigungsaufnahmen tragen, die den Anbau von Teilen an die Profilaußenseite ermöglichen.

Nach einer Ausgestaltung ist vorgesehen, dass Profilseiten der Profilinnenseite und/oder Profilseiten der Profilaußenseite eine zum Innenraum des Rahmengestelles und/oder zur Außeneckkante hin offene, hinterschnittene Aufnahme bilden, die den Einbau von Montageschienen und dgl. erleichtern.

Von Vorteil ist eine Ausgestaltung, wenn sie so ausgeführt ist, dass er zur Rahmengestelldiagonale spiegelbildlich ausgebildet ist, da dann die Einbeziehung des Rahmenschenkels in das Rahmengestell erleichtert ist. Die Enden des Rahmenschenkels können dann vertauscht werden.

Die Rahmenschenkel lassen sich als Abschnitt eines Strangpressprofils leicht herstellen.

Nach einem anderen Herstellverfahren kann vorgesehen sein, dass er als Stanz-Biege-Teil hergestellt ist, dessen Stoß- und Verbindungsstelle in den Bereich eines Verbindungsabschnittes der Profilinnenseite oder der Profilaußenseite gelegt ist.

Die Erfindung wird anhand eines im Querschnitt dargestellten Ausführungsbeispieles eines Rahmenschenkels näher erläutert.

Mit AS1 und AS2 sind die beiden rechtwinklig aufeinander stoßenden Außenseiten eines Rahmengestelles angedeutet, dessen Rahmengestelldiagonale RGD als Winkelhalbierende eingetragen ist.

Die beiden Außenseiten AS1 und AS2 bilden eine Außeneckkante AEK, die jedoch vom Rahmenschenkel mit seiner Profilaußenseite 20 nicht beeinträchtigt wird und genügend Freiraum FR lässt. Die Profilaußenseite 20 und die Profilinnenseite 10 sind vorzugsweise jedoch nicht zwingend spiegelbildlich zur Rahmengestelldiagonale RGD ausgebildet und bilden auf den Außenseiten AS1 und AS2 Außenkanten AK1 und AK2. Sind die Profilinnenseite 10 und die Profilaußenseite 20 außerhalb der Außenkanten AK1 und AK2, vorzugsweise im Bereich der Rahmengestelldiagonale RGD miteinander verbunden, dann schließt der Rahmenschenkel zwei Hohlräume H1 und H2 ein. Die Hohlräume H1 und H2 können im Wesentlichen quadratischen oder rechteckigen Querschnitt aufweisen.

Die Profilinnenseite 10 ist als durchgehende Profilseite von Außenkante AK1 zu Außenkante AK2 geführt und steht im Winkel zu den anschließenden Profilseiten der Profilaußenseite 20, die als Anlageabschnitte 21 und 22 mit den Außenseiten AS1 und AS2 des Rahmengestelles zusammenfallen. Die Anlageabschnitte 21 und 22 der Profilaußenseite 20 gehen in Profilseiten 23 und 25 über, die senkrecht zu den zugekehrten Außenseiten AS1 und AS2 des Rahmengestelles stehen.

Bei dem Ausführungsbeispiel liegen die Anlageabschnitte 21 und 22 der Profilaußenseite 20 auf den Außenseiten AS1 und AS2, sind aber mit einer Aufnahmenut 26 bzw. 27 für ein Dichtungselement versehen. Die Anlagestege 21 und 22 gehen in Profilseiten 23 und 24 über, welche senkrecht zu ihren zugekehrten Außenseiten AS1 und AS2 des Rahmengestelles stehen. Die Profilseiten 23 und 24 reichen nicht bis zur Rahmengestelldiagonale RGD, sondern sind über einen Verbindungsabschnitt 25 miteinander verbunden, der senkrecht zur Rahmengestelldiagonale RGD ausgerichtet ist und mit einem gleich ausgerichteten Verbindungsabschnitt 19 der Profilinnenseite 10 verbunden ist. Dieser Verbindungsabschnitt 19 der Profilinnenseite 10 verbindet die Profilseiten 15 und 17 der Profilinnenseite 10, die parallel zu den Außenseiten AS1 und AS2 des Rahmengestelles verlaufen.

Die Profilseiten 15 und 17 gehen über Profilseiten 11 und 13 in die Außenkanten AK1 und AK2 des Rahmenschenkels über. Die Profilseiten 11 und 13 der Profilinnenseite 10 stehen senkrecht zu ihren zugekehrten Außenseiten AS1 und AS2. Die Hohlräume H1 und H2 haben im Wesentlichen einen quadratischen Querschnitt, der auch rechteckförmig sein kann. Die Profilseiten 11,13,15 und 17 sind mit mindestens einer Reihe von Befestigungsaufnahmen 12,14, 16 bzw. 18 versehen. Der Rahmenschenkel ist zur Rahmengestelldiagonale RGD spiegelbildlich ausgebildet.

## Patentansprüche

1. Rahmenschenkel für ein Rahmengestell eines Schaltschrankes, wobei der Rahmenschenkel mit einer Profilinnenseite (10) und einer Profilaußenseite (20) ein geschlossenes Hohlprofil mit zwei längsgerichteten Hohlräumen (H1 und H2) bildet, wobei die Profilaußenseite (20) zur Außeneckkante (AEK) des Rahmengestelles hin einen Freiraum (FR) abgrenzt, wobei die Profilinnenseite (10) mehrere im Winkel zueinander stehende Profilabschnitte (Profilseiten 11, 13, 15, 17) mit mindestens je einer Reihe von Befestigungsaufnahmen (12, 14, 16, 18) aufweist, wobei die Profilinnenseite (10) und die Profilaußenseite (20) im Bereich der rechtwinklig aufeinander stoßenden Außenseiten (AS1, AS2) des Rahmengestelles Außenkanten (AK1, AK2) bilden, an die sich in Richtung zur Außeneckkante (AEK) hin Anlagestege (21, 22) ohne oder mit Aufnahmenuten (26, 27) für Dichtungselemente anschließen, die jeweils an einem der beiden Hohlräume (H1, H2) angrenzen, wobei die Anlagestege (21, 22) in äußere Profilseiten (23, 24) übergehen, die senkrecht zu den zugekehrten Außenseiten (AS1, AS2) des Rahmenprofils stehen,
**dadurch gekennzeichnet,**
**dass** die äußeren Profilseiten unmittelbar (23, 24) über einen Verbindungsabschnitt (25) miteinander verbunden sind, der senkrecht zur Rahmengestelldiagonalen (RGD) ausgerichtet ist und mit einem gleich ausgerichtet inneren Verbindungsabschnitt (19) der Profilinnenseite (10) verbunden ist, und dass der senkrecht zur Rahmengestelldiagonalen (RGD) stehende, mit dem gleich ausgerichteten äußeren Verbindungsabschnitt (25) verbundene innere Verbindungsabschnitt (19) der Profilinnenseite innere Profilseiten (15, 17) unmittelbar verbindet, wobei diese inneren Profilseiten (15, 17) parallel zu den zugekehrten Außenseiten (AS1, AS2) des Rahmenschenkels verlaufen.

2. Rahmenschenkel nach Anspruch 1,
**dadurch gekennzeichnet,**
**dass** der Freiraum (FR) zumindest in dem von den Außenseiten (AS1, AS2) des Rahmengestelles ausgehenden Teilbereichen durch senkrecht zu den zugekehrten Außenseiten (AS1, AS2) stehende Profilseiten (23, 24) der Profilaußenseite (20) begrenzt ist.

3. Rahmenschenkel nach Anspruch 2,
**dadurch gekennzeichnet,**
**dass** die den Freiraum (FR) begrenzenden Profilseiten (23, 24) der Profilaußenseite (20) über einen Verbindungsabschnitt (25) miteinander und/oder mit der Profilinnenseite (10) verbunden sind.

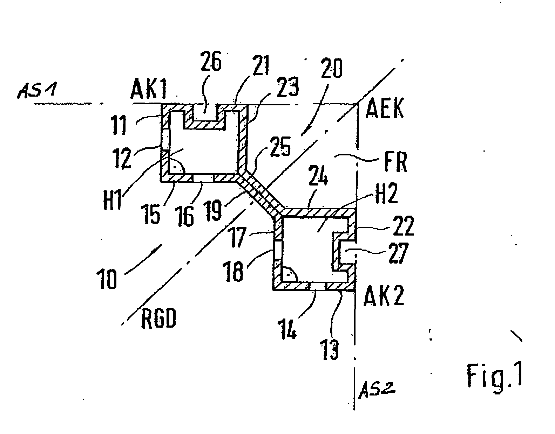

4. Rahmenschenkel nach einem der Ansprüche 1 bis 3,
**dadurch gekennzeichnet,**
**dass** die Profilinnenseite (10) eine von Außenkante (AK1) zu Außenkante (AK2) geführte Profilseite (11,13) ist, die spiegelbildlich zur Rahmengestelldiagonale (RGD) mit Befestigungsaufnahmen (12,14) versehen ist (Fig. 1).

5. Rahmenschenkel nach einem der Ansprüche 1 bis 4,
**dadurch gekennzeichnet,**
**dass** die Profilinnenseite (10) und die Profilaußenseite (20) zwei im Querschnitt im Wesentlichen quadratische oder rechteckförmige Hohlräume (H1, H2) einschließen.

6. Rahmengestell nach einem der Ansprüche 1 bis 5,
**dadurch gekennzeichnet,**
**dass** er als Abschnitt aus einem Strangpressprofil hergestellt ist.

7. Rahmenschenkel nach einem der Ansprüche 1 bis 6,
**dadurch gekennzeichnet,**
**dass** er als Stanz-Biege-Teil hergestellt ist, dessen Stoß- und Verbindungsstelle in den Bereich eines Verbindungsabschnittes (19 bzw. 29) der Profilinnenseite (10) oder der Profilaußenseite (20) gelegt ist.

8. Rahmenschenkel nach einem der Ansprüche 1 bis 7,
**dadurch gekennzeichnet,**
**dass** Profilseiten (15, 17) der Profilinnenseite (10) und/oder Profilseiten (23, 24) der Profilaußenseite (20) eine zum Innenraum des Rahmengestelles und/oder zur Außeneckkante (AEK) hin offene, hinterschnittene Aufnahme bilden.

9. Rahmenschenkel nach einem der Ansprüche 1 bis 8,
**dadurch gekennzeichnet,**
**dass** er zur Rahmengestelldiagonale (RGD) spiegelbildlich ausgebildet ist.

## Claims

1. Frame leg for a framework of a switchgear cabinet, with the frame leg forming a closed hollow profile having two longitudinally directed hollow spaces (H1 and H2) with a profile inner side (10) and a profile outer side (20), with the profile outer side (20) delimiting a free space (FR) in the direction of the outer corner edge (AEK) of the framework, with the profile inner side (10) having a plurality of profile sections (profile sides 11, 13, 15, 17) which are at an angle to one another and each have at least a series of fastening mounts (12, 14, 16, 18), with the profile inner side (10) and the profile outer side (20) forming outer edges (AK1, AK2) in the region of the outer sides (AS1, AS2) of the framework which butt against one another at a right angle, which outer edges are adjoined in the direction of the outer corner edge (AEK) by abutment webs (21, 22) without or with accommodating grooves (26, 27) for sealing elements which in each case border one of the two hollow spaces (H1, H2), with the abutment webs (21, 22) merging with outer profile sides (23, 24) which are perpendicular to the facing outer sides (AS1, AS2) of the frame profile, **characterized in that** the outer profile sides (23, 24) are directly connected to one another by means of a connecting section (25) which is oriented perpendicular to the framework diagonal (RGD) and is connected to an inner connecting section (19), which is oriented in the same direction, of the profile inner side (10), and **in that** the inner connecting section (19) of the profile inner side, which inner connecting section is perpendicular to the framework diagonal (RGD) and is connected to the outer connecting section (25) which is oriented in the same direction, directly connects inner profile sides (15, 17), with these inner profile sides (15, 17) running parallel to the facing outer sides (AS1, AS2) of the frame leg.

2. Frame leg according to Claim 1, **characterized in that** the free space (FR) is bounded by profile sides (23, 24) of the profile outer side (20) which are perpendicular to the facing outer sides (AS1, AS2) at least in the subregion which starts from the outer sides (AS1, AS2) of the framework.

3. Frame leg according to Claim 2, **characterized in that** the profile sides (23, 24) of the profile outer side (20) which bound the free space (FR) are connected to one another and/or to the profile inner side (10) by means of a connecting section (25).

4. Frame leg according to one of Claims 1 to 3, **characterized in that** the profile inner side (10) is a profile side (11, 13) which is guided from outer edge (AK1) to outer edge (AK2) and is provided with fastening mounts (12, 14) in a manner which is mirror symmetrical with respect to the framework diagonal (RGD) (Figure 1).

5. Frame leg according to one of Claims 1 to 4, **characterized in that** the profile inner side (10) and the profile outer side (20) surround two hollow spaces (H1, H2) which have a substantially square or rectangular cross section.

6. Frame leg according to one of Claims 1 to 5, **characterized in that** it is produced as a section from an extruded profile.

7. Frame leg according to one of Claims 1 to 6, **characterized in that** it is produced as stamped and bent part whose abutment and connection point is situated in the region of a connecting section (19 or 25) of the profile inner side (10) or the profile outer side (20).

8. Frame leg according to one of Claims 1 to 7, **characterized in that** profile sides (15, 17) of the profile inner side (10) and/or profile sides (23, 24) of the profile outer side (20) form an undercut mount which is open towards the interior of the framework and/or towards the outer corner edge (AEK).

9. Frame leg according to one of Claims 1 to 8, **characterized in that** it is designed to be mirror-symmetrical with respect to the framework diagonal (RGD).

## Revendications

1. Montant pour un châssis d'une armoire de distribution, le montant formant, avec un côté intérieur (10) du profilé et un côté extérieur (20) du profilé, un profilé creux fermé avec deux espaces creux (H1 et H2) orientés dans la direction longitudinale, le côté extérieur (20) du profilé délimitant un espace libre (FR) en direction de l'arête du coin extérieur (AEK) du châssis, le côté intérieur (10) du profilé présentant plusieurs sections de profilé (côtés 11, 13, 15, 17 du profilé) disposées avec un certain angle les uns par rapport aux autres avec au moins pour chacun une rangée de logements de fixation (12, 14, 16, 18), le côté intérieur (10) du profilé et le côté extérieur (20) du profilé formant, dans la zone des côtés extérieurs (AS1, AS2) du châssis se touchant perpendiculairement, des arêtes extérieures (AK1, AK2), sur lesquelles se raccordent, en direction de l'arête du coin extérieur (AEK), des surfaces d'appui (21, 22) avec ou sans rainures de logement (26, 27) pour des éléments d'étanchéité, qui sont chacune adjacentes à l'un des deux espaces creux (H1, H2), les surfaces d'appui (21, 22) se raccordant sur des côtés extérieurs (23, 24) du profilé disposés perpendiculairement aux côtés extérieurs (AS1, AS2) se faisant face du profilé du châssis,
**caractérisé en ce que** les côtés extérieurs (23, 24) du profilé sont reliés directement entre eux au moyen d'une section de liaison (25) orientée perpendiculairement à la diagonale du châssis (RGD) et reliée à une section de liaison intérieure (19) du côté intérieur (10) du profilé orientée de la même manière, et **en ce que** la section de liaison intérieure (19) du côté intérieur du profilé, qui est perpendiculaire à la diagonale du châssis (RGD) et reliée avec la section de liaison extérieure (25) orientée dans la même direction, relie directement des côtés intérieurs (15, 17) du profilé, ces côtés intérieurs (15, 17) du profilé s'étendant parallèlement aux côtés extérieurs (AS1, SA2) du montant qui leur font face.

2. Montant selon la revendication 1,
**caractérisé en ce que** l'espace libre (FR) est délimité, au moins dans la zone partielle partant des côtés extérieurs (AS1, AS2) du châssis, par des côtés du profilé (23, 24) du côté extérieur (20) du profilé disposés perpendiculairement aux côtés extérieurs (AS1, AS2) qui leur font face.

3. Montant selon la revendication 2,
**caractérisé en ce que** les côtés du profilé (23, 24) du côté extérieur (20) du profilé qui délimitent l'espace libre (FR) sont reliés l'un à l'autre et/ou au côté intérieur (10) du profilé par une section de liaison (25).

4. Montant selon l'une des revendications 1 à 3,
**caractérisé en ce que** le côté intérieur (10) du profilé est un côté du profilé (11, 13) allant de l'arête extérieure (AK1) à l'arête extérieure (AK2), et qui est muni, de manière symétrique par rapport à la diagonale du châssis (RGD), de logements de fixation (12, 14) (fig. 1).

5. Montant selon l'une des revendications 1 à 4,
**caractérisé en ce que** le côté intérieur (10) du profilé et le côté extérieur (20) du profilé enferment deux espaces creux (H1, H2) de section sensiblement carrée ou rectangulaire.

6. Montant selon l'une des revendications 1 à 5,
**caractérisé en ce qu'**il est réalisé sous la forme d'un tronçon d'un profilé filé.

7. Montant selon l'une des revendications 1 à 6,
**caractérisé en ce qu'**il est réalisé sous la forme d'une pièce emboutie et pliée dont l'emplacement de contact et de liaison se situe dans la zone d'une section de liaison (19 ou 25) du côté intérieur (10) du profilé ou du côté extérieur (20) du profilé.

8. Montant selon l'une des revendications 1 à 7,
**caractérisé en ce que** des côtés de profilé (15, 17) du côté intérieur (10) du profilé et/ou des côtés de profilé (23, 24) du côté extérieur (20) du profilé forment un logement en creux ouvert en direction de l'espace intérieur du châssis et/ou de l'arête du coin extérieur (AEK).

9. Montant selon l'une des revendications 1 à 8,
**caractérisé en ce qu'**il est réalisé de manière symétrique par rapport à la diagonale du châssis (RGD).
